(19) Europäisches Patentamt
European Patent Office
Office européen des brevets

(11) Veröffentlichungsnummer: **0 003 112**
**B1**

(12) **EUROPÄISCHE PATENTSCHRIFT**

(45) Veröffentlichungstag der Patentschrift: **02.06.82**

(51) Int. Cl.³: **C 08 G 65/20**, C 07 C 67/24, C 07 C 69/16 // C08G18/48

(21) Anmeldenummer: **79100032.6**

(22) Anmeldetag: **08.01.79**

(54) **Verfahren zur Herstellung von Polybutylenglykolcarbonsäurediester durch Polymerisation von chemisch vorbehandeltem Tetrahydrofuran.**

(30) Priorität: **14.01.78 DE 2801578**
**17.01.78 DE 2801792**

(43) Veröffentlichungstag der Anmeldung:
**25.07.79 Patentblatt 79/15**

(45) Bekanntmachung des Hinweises auf die Patenterteilung:
**02.06.82 Patentblatt 82/22**

(84) Benannte Vertragsstaaten:
**BE DE FR GB**

(56) Entgegenhaltungen:
**DE-A-2 364 859**
**DE-A-2 445 961**
**DE-C-1 045 662**

(73) Patentinhaber: **BASF Aktiengesellschaft,**
**Carl-Bosch-Strasse 38, D-6700 Ludwigshafen (DE)**

(72) Erfinder: **Mueller, Herbert, Dr., Carostrasse 53,**
**D-6710 Frankenthal (DE)**
Erfinder: **Huchler, Otto Hermann, Dr.,**
**Weinbietstrasse 38, D-6703 Limburgerhof (DE)**
Erfinder: **Hoffmann, Herwig, Dr., Knietschstrasse 21,**
**D-6710 Frankenthal (DE)**

**EP 0 003 112 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Polybutylenglykolcarbonsäurediester durch Polymerisation von chemisch vorbehandeltem Tetrahydrofuran

Die Erfindung betrifft ein Verfahren zur Herstellung von Polybutylenglykolcarbonsäurediestern der Formel

$$R-CO-O-(CH_2CH_2CH_2CH_2-O)_n-CO-R$$

wobei das Tetrahydrofuran mit starken Mineralsäuren, organischen Sulfonsäuren, Silikagel und/oder Bleicherden behandelt und anschließend in Gegenwart üblicher Polymerisationskatalysatoren polymerisiert wird.

Die Polymerisation des Tetrahydrofurans (THF) mit Hilfe von Oxoniumionen als Katalysatoren ist durch die grundlegenden Arbeiten von H. Meerwein und Mitarbeitern (Angew. Chemie 72 (1960), 927) allgemein bekannt geworden.

Als Katalysatoren werden entweder vorgebildete Verbindungen oder solche, die in situ erzeugt werden, eingesetzt. Beschrieben werden z. B. folgende vorgebildete Trialkyloxoniumsalze als Katalysatoren:

$$[(C_2H_5)_3O]\ SbCl_6 \qquad [(C_2H_5)_3O]\ BF_4$$

$$[(C_2H_5)_3O]\ FeCl_4 \qquad [(C_2H_5)_3O]\ AlCl_4$$

Geeignete Komponenten, die im Reaktionsmedium Oxoniumionen bilden, sind vor allem Lewis-Säuren, wie $BF_3$, $AlCl_3$, $SnCl_4$, $SbCl_5$, $FeCl_3$ oder $PF_5$, die zusammen mit Äthylenoxid, Propylenoxid, Epichlorhydrin, Orthoestern und Acetalen, $\alpha$-Chloräther, Benzylchlorid, Triphenylmethylchlorid, Acetylchlorid oder $\beta$-Propiolacton eingesetzt werden können sowie anorganische Wasserstoffsäuren, wie $HClO_4$, $HBF_4$, $HSO_3F$, $HSO_3Cl$, $H_2SnCl_6$, $HJO_3$, $HSbCl_6$ oder $HFeCl_4$, die zusammen mit Carbonsäureanhydriden, Carbonsäurechloriden, $SOCl_2$, $POCl_3$ und Benzolsulfonsäurechlorid eingesetzt werden können, sowie schließlich in neuerer Zeit auch Aluminiumalkylverbindungen in Kombination mit Epichlorhydrin oder Wasser.

Anstelle von Katalysatoren wie Fluorsulfonsäure oder einem Gemisch aus Essigsäureanhydrid und Perchlorsäure werden nach Angaben der DE-A-2 364 859 zur Polymerisation von Tetrahydrofuran Katalysatorsysteme verwendet, die enthalten

a) das Salz einer Säure, die eine höhere Stärke als 100%ige Schwefelsäure besitzt, und das in Tetrahydrofuran löslich sein soll
b) ein organisches Säureanhydrid und
c) Schwefelsäure.

Die Herstellung von niedermolekularen Diacetaten von Di- und Polybutylenglykolen mit einem Polymerisationsgrad von 2 bis maximal 10 in Gegenwart von Bleicherde als Katalysator wird in der DE-A-1 226 560 beschrieben. Als Bleicherden genannt werden Aluminiumhydrosilikate oder Aluminium-Magnesiumhydrosilikate vom Typ Montmorrillonits, die durch Säure aktiviert sein können. Die Bleicherden haben gegenüber Katalysatorsystemen vom Typ der Oxoniumionen den Vorteil, daß sie wesentlich billiger sind und sehr leicht gehandhabt werden können. Ein weiterer nicht zu unterschätzender Vorzug ist die toxikologische Unbedenklichkeit der Bleicherden. Dagegen müssen viele der beschriebenen und technisch tatsächlich verwendeten Katalysatorsysteme als gefährlich und toxikologisch nicht unbedenklich angesehen werden.

Aus dieser Aufstellung der bekannt gewordenen Katalysatortypen, die keineswegs den Anspruch auf Vollständigkeit erhebt, sondern nur die wichtigsten bisher bekannten Systeme beschreibt, wird deutlich, daß es eine unübersichtliche Vielfalt von Katalysatoren gibt, mit denen Tetrahydrofuran zu Polybutylenglykol, auch Polytetrahydrofuran (PTHF) genannt, polymerisiert werden kann. Trotzdem haben aber nur einige wenige Katalysatoren technische Bedeutung erlangt. Denn nur sie gestatten es, Polymerisate zu erzeugen, die vom chemischen und physikalischen Eigenschaftsbild her den Markterfordernissen entsprechen.

Auch der Fachmann ist daher nicht in der Lage, aus dem bisher Bekannten einen optimalen Katalysator ohne weiteres herzuleiten. Die zur Zeit in der Technik verwendeten Katalysatoren leiten sich von $BF_3$, $FSO_3H$, $HClO_4$ sowie Oleum ab, wobei als Promotoren zusätzlich Olefinoxide, Acetylchlorid, Essigsäureanhydrid und Keten verwendet werden können. Diesen Verfahren haftet aber allgemein der Mangel an, daß die sogenannten Katalysatoren im strengen Sinne nicht katalytisch wirksam werden, sondern in Bezug auf das entstehende Makromolekül in stöchiometrischem Verhältnis eingesetzt werden. Für die Erzeugung eines Moleküls PTHF wird also mindestens ein Katalysatormolekül verbraucht. Dadurch gestaltet sich die PTHF-Herstellung nicht nur teuer, sondern sie stellt auch eine erhebliche Umweltbelastung dar. In der US-Patentschrift 3 358 042 ist z. B. ein Verfahren beschrieben, bei dem pro Molekül PTHF etwa 2 Moleküle $HSO_3F$ als Katalysator eingesetzt

werden müssen. Das primär erhaltene Polymerisat muß anschließend durch Hydrolyse aufgearbeitet werden, um es in ein katalysatorfreies Polyätherdiol umzuwandeln. Der Katalysator erscheint danach quantitativ als NaF und $Na_2SO_4$ im Abwasser. Für die Herstellung von 100 Teilen Polymerisat müssen 30 bis 40 Teile Salzfracht in Kauf genommen werden.

Auch bei der Verwendung von Bleicherden als Katalysator gemäß DE-A-1 226 560 sind Umweltprobleme zu bewältigen, da die pro Katalysatormenge erhältliche Menge PTHF begrenzt ist. So können pro Teil Bleicherde maximal 40 Teile PTHF hergestellt werden, wobei jedoch bereits relativ lange Reaktionszeiten in Kauf genommen werden müssen.

Nach Angaben der deutschen Offenlegungsschriften 2 445 961 und 2 624 286 kann THF mit Antimonpentachlorid als Katalysator in Gegenwart mindestens einer Carbonsäure und/oder mindestens eines Carbonsäureanhydrids und gegebenenfalls eines Alkohols umweltfreundlich, billig und mit hohen Raum-Zeit-Ausbeuten polymerisiert werden. Das beschriebene Verfahren ist gleichzeitig so variabel, daß der in der Praxis gewünschte Molekulargewichtsbereich, der sich im allgemeinen zwischen 500 und 3000 bewegt, lückenlos bestrichen werden kann.

Nachteilig an dem genannten Verfahren ist jedoch, daß bei Verwendung von THF technischer Qualität als Ausgangskomponente teilweise dunkel gefärbtes PTHF erhalten wird und die gewünschten Molekulargewichte nur schwer reproduzierbar sind.

Tetrahydrofuran technischer Qualität enthält geringe Mengen an Verunreinigungen in einer Konzentration von 10 bis 500 ppm. Die chemische Natur dieser Verunreinigungen ist unbekannt. Obwohl dieses Tetrahydrofuran technischer Qualität an sich von hoher Reinheit ist — es hat normalerweise einen Reinheitsgrad von >99,9% —, verursachen die Spurenverunreinigungen bei der Polymerisation eventuell die oben genannten Schwierigkeiten. Andererseits sind jedoch Farbe und reproduzierbare gleichbleibende Molekulargewichte wichtige Eigenschaften für ein Polymerisat, das technische Anwendung finden soll.

Aufgabe der vorliegenden Erfindung war es, die Polymerisation von insbesondere technischem THF in bezug auf bleibende Verfärbungen im Polymerisat, die Polymerisationsgeschwindigkeit und die Molekulargewichtseinstellung zu verbessern, d. h. Produkte zugänglich zu machen, die einen Polymerisationsgrad von n = 2 bis n = beliebig groß besitzen.

Gegenstand der vorliegenden Erfindung ist somit ein Verfahren zur Herstellung von Polybutylenglykolcarbonsäurediester der Formel

$$R-CO-O-(CH_2CH_2CH_2CH_2-O)_n-CO-R^1$$

in der R und $R^1$ gleich oder verschieden sind und einen Alkylrest, einen carboxylgruppenhaltigen, gegebenenfalls äthylenisch ungesättigten aliphatischen Rest oder einen carboxylgruppenhaltigen aromatischen Rest und n eine ganze Zahl von 2 bis 200 bedeuten, durch Polymerisation von Tetrahydrofuran, das dadurch gekennzeichnet ist, daß man das Tetrahydrofuran vor der Polymerisation mit starken Mineralsäuren, organischen Sulfonsäuren, Silikagel und/oder Bleicherde behandelt und danach in Gegenwart eines Polymerisationskatalysators und mindestens einer Carbonsäure und/oder eines Carbonsäureanhydrids polymerisiert.

Da dem Fachmann bekannt ist, daß THF meist durch Dehydratisierung von Butandiol-(1,4) in Gegenwart von starken Mineralsäuren hergestellt wird, war dieser erfindungsgemäße Befund überraschend und nicht vorherzusehen. Es konnte nicht angenommen werden, daß eine erneute Behandlung mit sauer wirkenden Verbindungen der genannten Art einen in Bezug auf die THF-Polymerisation zusätzlichen »Reinigungseffekt« bewirken würde.

Durch diese Behandlung wird das THF in einer Weise verändert, ohne daß diese Veränderung mit Sicherheit analytisch nachgewiesen werden kann, daß nunmehr die Polymerisation in absolut reproduzierbarer Weise verläuft. Insbesondere werden Produkte erhalten, deren Farbzahl unter 10 APHA (nach DIN 53 409, Juli 1967) liegt und deren Molekulargewichte genau durch die bei der Reaktionsdurchführung festgelegten Parameter bestimmt werden. Da nicht bekannt ist, in welcher Weise der Behandlungsprozeß stattfindet und welche Spurenverunreinigungen aus dem Monomeren entfernt oder unschädlich gemacht werden, wird die erfindungsgemäße Behandlung des THF zweckmäßigerweise stets angewandt. Sie ist sehr einfach und ohne große Kosten durchführbar, so daß sich die Behandlung auch für solche Fälle empfiehlt, bei denen das technische THF nicht unbedingt behandelt werden müßte. Unterbleibt die Vorbehandlung, so können Fehlchargen entstehen, die nicht weiter verwendet werden können, so daß erhebliche finanzielle Verluste eintreten.

Zur Behandlung des THF eignen sich starke Mineralsäuren, organische Sulfonsäuren, Silikagel und Bleicherden. Diese stark sauren Verbindungen können als solche oder in Form von Mischungen miteinander angewendet werden. Vorzugsweise verwendet werden Bleicherden.

Als starke Mineralsäuren oder organische Sulfonsäuren kommen solche mit pKs-Werten von ungefähr −5 bis ungefähr +4, vorzugsweise −5 bis +2 in Betracht. Im einzelnen seien beispielhaft genannt Perchlorsäure, Salzsäure, Schwefelsäure, Phosphorsäure und Toluolsulfonsäure und Ionenaustauscher mit Sulfonsäuregruppen.

Als Silikagel eignen sich insbesondere die handelsüblichen Kieselgel-Sorten, wie sie für

Trocknungszwecke oder als Katalysatorträger verwendet werden. Bevorzugt werden nach dem erfindungsgemäßen Verfahren Bleicherden, wie wasserhaltige Aluminium-hydrosilikate aus der Montmorrilonit-Gruppen, in denen Aluminiumionen durch Eisen oder Magnesiumionen ersetzt sind verwendet. Diese Stoffe sind als natürlich vorkommende Bleicherden bekannt.

Zur Behandlung des THF werden nur geringe Mengen der erfindungsgemäß verwendbaren sauren Verbindungen benötigt. Vorteilhafte Ergebnisse werden erzielt, wenn man die Mineralsäuren organischen Sulfonsäuren, Silikagel und Bleicherden in Mengen von 0,1 bis 5, vorzugsweise von 0,1 bis 3 Gew.-%, bezogen auf THF, verwendet. Natürlich kann das THF auch mit größeren Mengen behandelt werden; doch bringt dies keinen weiteren Vorteil.

Zur Durchführung der Behandlungsoperation wird das THF mit den sauren Verbindungen der beschriebenen Art innig gemischt. Die Einwirkungsdauer beträgt zwischen ungefähr 3 Minuten und 12 Stunden. Vorzugsweise begnügt man sich mit Einwirkungszeiten von 0,5 bis 3 Stunden.

Der Behandlungsprozeß kann bei Raumtemperatur oder auch bei erhöhter Temperatur, z. B. beim Siedepunkt des THF, durchgeführt werden. Vorzugsweise angewendet werden Temperaturen zwischen 10 und 66° C.

Nach erfolgter Einwirkung der Mineralsäure, der organischen Sulfonsäuren, des Silikagels und/oder der Bleicherden auf das THF wird dieses vorzugsweise wieder abgetrennt. Hierzu eignen sich die üblichen physikalischen Trennmethoden. Eine einfache Methode bietet sich an, wenn zur Behandlung ein Feststoff, beispielsweise Bleicherden, verwendet werden.

In diesem Falle genügt es, den Feststoff einfach durch Filtrieren oder Zentrifugieren vom THF zu trennen. Die Behandlung mit Feststoffen läßt sich sehr leicht kontinuierlich durchführen, wenn das zu behandelnde THF über ein Festbett geleitet wird. Werden Säuren für die Behandlung verwendet, die sich in THF lösen, so wird das THF zweckmäßigerweise durch Destillation abgetrennt. Das auf diese Weise behandelte THF besitzt eine ausgezeichnete Reinheit und ermöglicht reproduzierbar die Herstellung von farblosem PTHF.

Die Polymerisation des erfindungsgemäß behandelten THF erfolgt in bekannter Weise in Gegenwart von zum Stand der Technik gehörenden Katalysatoren. Besonders geeignet und daher vorzugsweise verwendet werden als Polymerisationskatalysatoren für THF Antimonpentachlorid in Gegenwart von mindestens einer Carbonsäure und/oder eines Carbonsäureanhydrids und gegebenenfalls eines Alkohols entsprechend den deutschen Offenlegungsschriften 2 445 961 und 2 624 286 und Bleicherden, insbesondere Bleicherden mit einem Wassergehalt von weniger als 3 Gew.-%, in Gegenwart mindestens eines Carbonsäureanhydrids.

Bleicherden oder auch Fullererden gehören kristallographisch zu den Montmorriloniten. Hierbei handelt es sich um kolloidale, wasserhaltige Aluminiumhydrosilikate, die natürlich vorkommen und in denen Aluminiumionen teilweise durch Eisen oder Magnesium ersetzt sein können. Das Verhältnis von Kieselsäure zu den Oxiden 2- bzw. 3wertiger Metalle in diesen Mineralien beträgt meistens 4 : 1. Die handelsüblichen Produkte, die meistens durch Säurebehandlung aktiviert werden und einen Wassergehalt von 4 bis 8 Gew.-%, bezogen auf das Gesamtgewicht, besitzen, werden in großem Umfang als Katalysatoren, zur Raffination von Speiseölen, Fetten und Mineralölen, Adsorptionsmittel und Füllstoffe verwendet.

Bei den gebräuchlichen Anwendungsgebieten entfalten Bleicherden, im Einklang mit den Empfehlungen der Hersteller, ihre maximale Wirksamkeit, wenn sie in der handelsüblichen wasserhaltigen Form zur Anwendung gelangen. Es war daher überraschend, daß bei der Polymerisation von THF wesentlich bessere Ergebnisse erzielt werden, wenn anstelle der handelsüblichen, wasserhaltigen Mineralien wasserfreie oder insbesondere im wesentlichen wasserfreie Bleicherden als Katalysator eingesetzt werden. Die wasserfreien Bleicherden zeigen eine höhere katalytische Aktivität in bezug auf die Polymerisationsgeschwindigkeit, den erzielbaren Umsatz und die Katalysatoreinsatzzahl. Vorteilhaft ist ferner, daß mit im wesentlichen wasserfreien Bleicherden Polybutylenglykolcarbonsäurediester, insbesondere Polybutylenglykoldiacetate, erhalten werden, deren Polymerisationsgrad von $n=2$ aufwärts je nach den Reaktionsbedingungen, beliebig eingestellt werden kann. Mit Hilfe des erfindungsgemäßen Polymerisationsverfahrens werden Diester von Polybutylenglykolen mit Polymerisationsgraden von $n=2$ bis $n=200$, vorzugsweise von $n=5$ bis 50, insbesondere von $n=12$ bis 36, hergestellt, d. h. Polymerisate, die nach der Hydrolyse hydroxylgruppenhaltige PTHF mit Molekulargewichten von ungefähr 150 bis 15 000, vorzugsweise 400 bis 4000, insbesondere von 1000 bis 3000, ergeben. PTHF mit diesen hohen Molekulargewichten sind erforderlich, um bei den Enderzeugnissen, z. B. bei der Herstellung von Polyurethanen, ein genügend hohes mechanisches Eigenschaftsniveau zu erzeugen. Der Einsatz von PTHF mit Molekulargewichten kleiner als 500 ist durchweg auf die Lösung von speziellen Problemen beschränkt.

Ein anderer Vorteil der Polymerisation von THF mit Bleicherde, vorzugsweise solcher Bleicherden mit einem Wassergehalt kleiner als 3 Gew.-%, besteht darin, daß die Katalysatoren nicht wie bei den konventionellen Verfahren in gelöster Form im Reaktionsprodukt vorliegen und durch mühsame Wasch- und Fällungsprozesse kostspielig abgetrennt werden müssen, sondern durch gebräuchliche physikalische Trennmethoden, wie z. B. Filtrieren oder Zentrifugieren, isoliert werden können. Überraschenderweise wurde festgestellt, daß die abgetrennten, im wesentlichen wasserfreien Bleicherden erneut für eine beliebige Anzahl weiterer Polymerisationen verwendbar sind. So können

nach dem erfindungsgemäßen Verfahren ohne Schwierigkeiten pro Teil im wesentlichen wasserfreier Bleicherde bis zu 1000 oder mehr Teile THF zum Diester des Polybutylenglykols polymerisiert werden.

Im Gegensatz zu den konventionellen quasi-katalytischen Polymerisationsprozessen muß die Polymerisation mit Bleicherde mit einem Wassergehalt kleiner als 3 Gew.-% als echt katalytisch eingestuft werden, da der Katalysator beliebig oft verwendbar ist. Bei Verwendung von handelsüblichen, wasserhaltigen Bleicherden nimmt hingegen dessen Aktivität bei jedem weiteren Einsatz sehr schnell ab, so daß es wirtschaftlich nicht vertretbar ist, den abgetrennten Katalysator erneut für weitere Polymerisationen zu verwenden. Hierin dokumentiert sich die Umweltfreundlichkeit und der erhebliche technische Fortschritt des neuen Polymerisationsverfahrens, da keine größeren Mengen an Salzfracht zu beherrschen und zu deponieren sind.

Geeignete Bleicherden sind insbesondere Aluminiumhydrosilikate oder Aluminium-Magnesiumhydrosilikate vom Typ des Montmorrillonits, die durch Säure aktiviert sein können und z. B. unter dem Namen »Tonsil« im Handel sind. Zur Herstellung der im wesentlichen wasserfreien Bleicherden werden handelsübliche wasserhaltige Bleicherden bei Temperaturen von 100 bis 200° C, vorzugsweise von 110 bis 150° C, in 1 bis 8 Stunden, vorzugsweise 2 bis 4 Stunden, bei Normaldruck oder vorzugsweise unter vermindertem Druck entwässert. Die als Katalysatoren verwendbaren im wesentlichen wasserfreien Bleicherden besitzen Wassergehalte von weniger als 3 Gew.-%, vorzugsweise von 0,001 bis 1,5 Gew.-%, und insbesondere von 0,1 bis 1,0 Gew.-%. Für die Polymerisation des THF werden nur geringe Mengen der im wesentlichen wasserfreien Bleicherden benötigt. Vorteilhafte Ergebnisse werden erzielt, wenn man sie, bezogen auf den Gesamtpolymerisationsansatz, in einer Menge von 1 bis 20 Gew.-%, vorzugsweise 5 bis 10 Gew.-%, einsetzt. Natürlich können auch größere und kleinere Mengen verwendet werden. Die Eigenschaften der erhaltenen Polymerisate werden dadurch kaum berührt. Lediglich die Reaktionsgeschwindigkeit, die in erster Näherung direkt proportional der angewendeten Katalysatormenge ist, wird dadurch beeinflußt.

Die im wesentlichen wasserfreien Bleicherden enthalten erst in Gegenwart des Promotors Carbonsäureanhydrid ihre katalytische Wirkung. Vorteilhafterweise verwendet man solche Carbonsäureanhydride, die sich von aliphatischen oder aromatischen, poly- und/oder vorzugsweise Monocarbonsäuren mit 2 bis 12, vorzugsweise 2 bis 8 Kohlenstoffatomen ableiten. Genannt seien beispielsweise Anhydride von aliphatischen Carbonsäuren mit 2 bis 12 Kohlenstoffatomen, wie Buttersäureanhydrid, Valeriansäureanhydrid, Capronsäureanhydrid, Caprylsäureanhydrid, Pelargonsäureanhydrid und vorzugsweise Propionsäureanhydrid und Essigsäureanhydrid, Anhydride von aromatischen und aliphatischen Polycarbonsäuren, insbesondere Dicarbonsäuren, wie Phthalsäureanhydrid, Naphthalinsäureanhydrid und vorzugsweise Bernsteinsäure- und Maleinsäureanhydrid. Aus Preisgründen und Gründen der leichten Zugänglichkeit wird Essigsäureanhydrid bevorzugt. Selbstverständlich sind auch gemischte Anhydride und Mischungen der oben genannten Anhydride verwendbar.

Wie bereits erwähnt, können nach dem erfindungsgemäßen Verfahren Diester von Polybutylenglykol mit einem beliebigen Polymerisationsgrad hergestellt werden. Der Polymerisationsgrad wird im wesentlichen bestimmt durch die Carbonsäureanhydridkonzentration der Polymerisationsmischung. Je niedriger die Carbonsäureanhydridkonzentration gewählt wird, um so höhere Molekulargewichte werden erreicht und umgekehrt. Da die Polymerisationsgrade auch von den Eigenschaften der im wesentlichen wasserfreien Bleicherden bestimmt werden, ist es im allgemeinen erforderlich, für eine bestimmte Bleicherde die Säureanhydridkonzentration zu ermitteln, die das gewünschte Molekulargewicht ergibt. Da die Art der verwendeten im wesentlichen wasserfreien Bleicherde einen geringeren Einfluß auf das Molekulargewicht hat als die Carbonsäureanhydridkonzentration, sollen hier als Orientierung beispielsweise folgende Werte angegeben werden. Bei einer Carbonsäureanhydridkonzentration von beispielsweise 70 bis 80 Molprozent wird das THF bei einer Polymerisationstemperatur von 30 bis 40° C fast quantitativ in den Diester des Dibutylenglykols übergeführt. Wendet man eine Carbonsäureanhydridkonzentration von etwa 3 Molprozent an, so erhält man ein Polymerisat mit einem Polymerisationsgrad $n = 25$ bis 30.

Zur Herstellung von Diestern von Polybutylenglykolen mit Polymerisationsgraden von 12 bis 36 bei z. B. 30° C, die insbesondere durch Hydrolyse in PTHF übergeführt und zur Herstellung von Polyurethanen verwendet werden, hat sich eine Carbonsäureanhydridkonzentration, insbesondere Acetanhydridkonzentration, von 12 bis 0,5 Molprozent, vorzugsweise von 9 bis 1,5 Molprozent, besonders gut bewährt, so daß vorzugsweise in diesem Konzentrationsbereich polymerisiert wird.

Die Polymerisation wird im allgemeinen bei Temperaturen von 0° C bis 70° C durchgeführt. Da einerseits unterhalb von 20° C die Reaktionsgeschwindigkeit sehr stark abnimmt und oberhalb von 60° C der Reaktionsumsatz gering wird, wird vorzugsweise bei Temperaturen von 20 bis 50° C polymerisiert. Die Polymerisationszeiten betragen je nach angewendeter Temperatur und Katalysatorkonzentration ungefähr 1 bis 20 Stunden, vorzugsweise 2 bis 10 Stunden.

Nach erfolgter Polymerisation wird die Reaktion durch Abtrennen des Katalysators abgestoppt. Die Abtrennung kann mit Hilfe von gebräuchlichen physikalischen Trennmethoden, beispielsweise durch Filtrieren oder Zentrifugieren, erfolgen. Man erhält Reaktionslösungen, die neben Diestern des Polybutylenglykols je nach angewendeten Reaktionsbedingungen noch 0 bis 50 Gew.-%, bezogen auf das Gesamtgewicht der Reaktionslösung, nicht umgesetztes THF enthalten können. Da die so

erhaltene Reaktionslösung außer dem Diester des Polybutylenglykols nur flüchtige Bestandteile nämlich Carbonsäureanhydrid und nicht umgesetztes THF, enthält, genügt es, diese durch Destillation gegebenenfalls unter vermindertem Druck, abzutrennen.

Die abgetrennten im wesentlichen wasserfreien Bleicherden, können ohne weitere Vorbehandlung erneut als Katalysatoren eingesetzt werden.

Die nach den erfindungsgemäßen Verfahren erhaltenen Polybutylenglykole, die als Endgruppen Carbonsäurereste gebunden enthalten, lassen sich in bekannter Weise durch Umesterung beispielsweise mit Methanol, entsprechend US-PS 2 499 725 sowie Journal of American Chemical Society, Bd. 70, Seite 1842, in die entsprechenden Dihydroxyverbindungen überführen.

Die auf diese Weise erhaltenen Polytetrahydrofurane, die vorzugsweise Molekulargewichte von ungefähr 1000 bis 3000 besitzen, eignen sich vorzüglich zur Herstellung von Polyurethanen, insbesondere Polyurethan-Elastomeren, Gießharzen u. a.

Die folgenden Beispiele sollen das erfindungsgemäße Verfahren näher erläutern, ohne es zu begrenzen. Die genannten Teile sind Gewichtsteile; sie verhalten sich zu Volumenteilen wie Kilogramm zu Litern.

## Beispiel 1

### (a) Behandlung des THF

Ein marktgängiges technisches Tetrahydrofuran zeigt nach der gaschromatographischen Analyse (3 m Glassäule, Triton X 305, 50 bis 200° C) folgende Zusammensetzung:

| | Retentionszeit, sec | | | | |
|---|---|---|---|---|---|
| | 0–90 | 106 | 149 | 149–505 | 505 |
| Flächenprozent | 0,01 | 99,8 | 0,04 | 0,03 | 0,02 |

Dieses Tetrahydrofuran wird mit 0,5 Gew.-% der käuflichen Bleicherde Tonsil Optimum FF® (Süd-Chemie AG, München) versetzt und 2 Stunden auf Rückflußtemperatur erwärmt. Danach wird vom Feststoff abdestilliert. Das so erhaltene gereinigte Tetrahydrofuran besitzt folgende gaschromatographische Analyse, die sich nur wenig von den oben angegebenen Werten unterscheidet:

| | Retentionszeit, sec | | | | |
|---|---|---|---|---|---|
| | 0–90 | 106 | 149 | 149–505 | 505 |
| Flächenprozent | 0,01 | 99,8 | 0,05 | 0,03 | 0,02 |

Das gleiche Ergebnis wird erhalten, wenn zur Behandlung des THF anstelle der Bleicherde Tonsil Optimum FF verwendet werden:

| | |
|---|---|
| 2 Gew.-% | $Al_2(OH)_2$, $Si_4O_{10}$ (Betonit der Firma Süd-Chemie, München), |
| 0,5 Gew.-% | p-Toluolsulfonsäure, |
| 0,5 Gew.-% | Schwefelsäure oder |
| 0,5 Gew.-% | handelsübliches Kieselgelgranulat (Kieselgel A der Firma BASF Aktiengesellschaft). |

### (b) Polymerisation des behandelten THF

Durch Vermischen von 149 Teilen Antimonpentachlorid und 60 Teilen Essigsäure bei 50° C unter Kühlen wird eine Lösung des Essigsäure-antimonpentachlorid-Katalysators hergestellt.

2160 Teile THF, das wie unter (a) beschrieben, mit Tonsil Optimum FF behandelt wurde, werden auf 30° C erwärmt und nacheinander mit 357 Teilen Essigsäureanhydrid und 5 Teilen der Katalysatorlösung versetzt. Nach einer Polymerisationszeit von 6 Stunden bei 30° C wird die Reaktion durch Zugabe von 3 Teilen Calciumhydroxid beendet. Suspendiertes Hydroxid mit daran gebundenem Antimonkatalysator wird anschließend durch Druckfiltration aus dem Reaktionsprodukt abgetrennt. Aus der klaren Polymerisatlösung entfernt man anschließend nicht umgesetztes Tetrahydrofuran und Essigsäureanhydrid bei 100° C unter vermindertem Druck. Anschließend wird erneut filtriert. Man erhält 1600 Teile

acetylgruppenhaltiges Polytetrahydrofuran mit einem Molekulargewicht von ungefähr 2000. Die Farbzahl des geschmolzenen Produktes liegt unter 10 APHA-Einheiten. Das destillativ vom Polymerisat zurückgewonnene Tetrahydrofuran kann für weitere Polymerisationen ohne Behandlung wieder eingesetzt werden.

## Beispiel 2

2160 Teile THF, das wie unter Beispiel 1 (a) mit Tonsil Optimum FF behandelt wurde, werden auf 30° C erwärmt und nacheinander mit 357 Teilen Essigsäureanhydrid und 50,3 Teilen Bleicherde (Tonsil Optimum FF) als Polymerisationskatalysator versetzt. Nach einer Polymerisationszeit von 6 Stunden bei 30° C wird die Bleicherde abfiltriert und aus der Polymerisatlösung das nicht umgesetzte THF und Essigsäureanhydrid bei 100° C unter vermindertem Druck abdestilliert. Man erhält 850 Teile acetylgruppenhaltiges Polytetrahydrofuran mit einem Molekulargewicht von 1670.

## Beispiel 3

Verfährt man analog den Angaben von Beispiel 2, verwendet jedoch anstelle von Bleicherde Tonsil Optimum FF als Katalysator die handelsübliche Montmorillonit-Katalysatoren der Firma Süd-Chemie, München, Katalysator K 10, Katalysator K SF und Katalysator KP 10, so erhält man Polymerisate vom Molekulargewicht 2000, deren Farbzahlen bei ungefähr 10 APHA-Einheiten liegen.

## Vergleichsbeispiel A

Verfährt man analog den Angaben von Beispiel 1 (b), verwendet jedoch als Monomer nicht erfindungsgemäß behandeltes THF technischer Qualität, so erhält man 1250 Teile acetylgruppenhaltiges PTHF vom Molekulargewicht 2600, das in geschmolzenem Zustand eine Farbzahl von ca. 160 APHA-Einheiten aufweist.

## Vergleichsbeispiel B

2160 Teile unbehandeltes, technisches THF werden mit 357 Teilen Essigsäureanhydrid gemischt und bei 30° C 6 Stunden in Gegenwart von 50,3 Teilen Tonsil Optimum FF (der Firma Süd-Chemie, München) polymerisiert. Danach wird die Bleicherde abfiltriert und aus der Polymerisatlösung das nicht umgesetzte THF und Essigsäureanhydrid bei 100° C unter vermindertem Druck abdestilliert. Man erhält 510 Teile acetylgruppenhaltiges PTHF vom Molekulargewicht 1865 mit einer Farbzahl von ca. 140 APHA-Einheiten.

## Vergleichsbeispiel C

Verfährt man analog Vergleichsbeispiel B, erhöht jedoch die Menge an Tonsil Optimum FF um den Betrag, der zuvor für die Reinigung des THF's angewendet wurde (0,5 Gew.-%, bezogen auf die zu polymerisierende THF-Menge) und verwendet handelsübliches THF, das nicht erfindungsgemäß behandelt wurde, so werden 670 Teile acetylgruppenhaltiges PTHF vom Molekulargewicht 1740 mit einer Farbzahl von ca. 160 APHA-Einheiten erhalten.

Ein Vergleich mit dem erfindungsgemäß durchgeführten Beispiel zeigt, daß durch die erfindungsgemäße Behandlung des THF bei der nachfolgenden Polymerisation die Umsätze beträchtlich erhöht und die Farbzahlen stark erniedrigt werden.

## Beispiel 4

In einem Rührbehälter wird eine Mischung aus 2160 Teilen Tetrahydrofuran und 102 Teilen Acetanhydrid auf 40° C erwärmt und mit 226 Teilen einer handelsüblichen Bleicherde (®Tonsil Optimum Ff, Süd-Chemie AG, München) versetzt, deren Wassergehalt durch Trocknen bei 130° C in 8 Stunden auf 0,01 Gew.-%, reduziert wurde. Die sofort einsetzende exotherme Reaktion wird durch Kühlung bei 40° C gehalten. Bereits nach 2 Stunden wird ein Umatz von 58 Gew.-% erreicht. Der Katalysator wird durch Filtration abgetrennt. Aus der farblosen Reaktionslösung erhält man durch Abdestillieren des nicht umgesetzten THF ein farbloses Polybutylenglykoldiacetat mit einem Molekulargewicht von 1900 (errechnet aus der Verseifungszahl).

Verwendet man die von der Firma Süd-Chemie, München vertriebene Bleicherde »Tonsil Optimum

extra (mex)«, so wird bei einem Umsatz von 60% ein Polymerisat vom Molekulargewicht 2300 erhalter

Eine unter den gleichen Versuchsbedingungen durchgeführte Polymerisation mit der Bleicherd »VMP 24/48« der Firma Mid-Florida Mining Company, U.S.A., deren Wassergehalt durch Trocknen be 110°C und 30 Torr während 8 Stunden von 5% auf 0,06% herabgesetzt wurde, ergab eine Polymerisationsumsatz von 41% und ein Polymeres mit dem Molekulargewicht 3000.

## Beispiel 5

Verfährt man analog den Angaben von Beispiel 4, verwendet jedoch anstelle von 102 Teilen 306 Teil Acetanhydrid, so erzielt man nach 8 Stunden einen Polymerisationsumsatz von 73%. Das erhalten Polymerisat besitzt ein Molekulargewicht von 750 (ermittelt aus der Verseifungszahl).

## Beispiel 6

Man verfährt entsprechend der Beschreibung des Beispiels 4 und polymerisiert 2160 Teil Tetrahydrofuran mit 102 Teilen Essigsäureanhydrid in Gegenwart von 226 Teilen Tonsil Optimum Fl dessen Wassergehalt zuvor durch Trocknen bei 115°C während 24 Stunden auf weniger als 0,1% reduziert wurde. Man erzielt das im Beispiel 4 angegebene Polymerisationsergebnis.

Der abgetrennte Katalysator wird erneut für die Polymerisation von 2160 Teilen Tetrahydrofuran un 102 Teilen Essigsäureanhydrid bei 40°C verwendet. Das dabei erzielte Ergebnis unterscheidet sic nicht von dem ersten Polymerisationsversuch. Selbst nach 20maliger Wiederverwendung de Katalysators unter gleichen Reaktionsbedingungen bleibt das Versuchsergebnis konstant.

## Vergleichsbeispiel D

In einem Rührbehälter wird eine Mischung aus 2160 Teilen unbehandeltem technische Tetrahydrofuran und 102 Teilen Acetanhydrid auf 40°C erwärmt und in Gegenwart von 226 Teilen ein käuflichen Bleicherde (Handelsprodukt Tonsil Optimum FF® der Firma Süd-Chemie, München), d einen Wassergehalt von 5 Gew.-%, bezogen auf das Gesamtgewicht, aufwies, polymerisiert. Nac einer Polymerisationszeit von 2 Stunden wird ein Umsetzungsgrad von Tetrahydrofuran von Gew.-% erreicht. Das Molekulargewicht des erhaltenen Polytetrahydrofuranacetats beträgt 250 Selbst nach einer Polymerisationszeit von 32 Stunden beträgt der Umsetzungsgrad lediglich Gew.-%, das Molekulargewicht des erhaltenen Polytetrahydrofurandiacetats ist 2450.

Verwendet man dieselbe käufliche Bleicherde mit einem Wassergehalt von 6,3 Gew.-%, bezoge auf das Gesamtgewicht, als Polymerisationskatalysator, so erhält man nach einer Polymerisationsze von 32 Stunden ein Polymerisat mit einem Molekulargewicht von 2900 bei einem Umsetzungsgrad vo 19 Gew.-%.

Wird der Katalysator aus den Polymerisationsansätzen durch Filtration abgetrennt und erneut z Polymerisation verwendet, so erreicht man bei der erneuten Umsetzung einen Umsetzungsgrad von Gew.-% und ein Molekulargewicht des Polymerisats von 3100.

Die Vergleichsbeispiele zeigen, daß nicht vorbehandelte handelsübliche Bleicherden mit eine Wassergehalt größer als 3 Gew.-%, bezogen auf das Gesamtgewicht, eine geringere katalytisch Aktivität besitzen und bei der Polymerisation mangelhaft reproduzierbare Ergebnisse liefern.

## Beispiel 7

Handelsübliche Bleicherde (®Tonsil Optimum FF der Firma Süd-Chemie AG, München) wird b 150°C bis zur Gewichtskonstanz getrocknet. Der Wassergehalt war hierbei von 3,5 Gew.-% a weniger als 0,01 Gew.-% gesenkt worden.

THF von wie in Beispiel 1 beschriebener technischer Qualität wird mit 1 Gew.-% der obengenannt getrockneten Bleicherde versetzt und eine halbe Stunde unter Rückfluß gekocht. Anschließend wi die Bleicherde abfiltriert.

4320 Teile des so gereinigten THF werden in einem Rührbehälter auf 40°C erwärmt u nacheinander mit 408 Teilen Essigsäureanhydrid und 453 Teilen der obengenannten getrocknet Bleicherde versetzt. Nach einer Polymerisationszeit von 8 Stunden bei 40°C wird die Bleicher abfiltriert und aus der Polymerisatlösung das nicht umgesetzte Tetrahydrofuran und Essigsäureanh drid bei 100°C unter vermindertem Druck abdestilliert. Als Rückstand erhält man 3000 Te acetylgruppenhaltiges Polytetrahydrofuran vom Molekulargewicht 1000. Das Polymerisat weist ei Farbzahl von weniger als 10 APHA-Einheiten auf.

Durch Verseifung läßt es sich in Polybutylenglykol entsprechender Eigenschaften überführen u als Diol-Komponenten für die Herstellung von Polyurethanharzen verwenden.

## Patentansprüche

1. Verfahren zur Herstellung von Polybutylenglykolcarbonsäurediester der Formel

$$R-CO-O-(CH_2CH_2CH_2CH_2-O)_n-CO-R^1$$

in der R und $R^1$ gleich oder verschieden sind und einen Alkylrest, einen carboxylgruppenhaltigen, gegebenenfalls äthylenisch ungesättigten aliphatischen Rest oder einen carboxylgruppenhaltigen aromatischen Rest und n eine ganze Zahl von 2 bis 200 bedeuten, durch Polymerisation von Tetrahydrofuran, dadurch gekennzeichnet, daß man das Tetrahydrofuran vor der Polymerisation mit starken Mineralsäuren, organischen Sulfonsäuren, Silikagel und/oder Bleicherde behandelt und danach in Gegenwart eines Polymerisationskatalysators und mindestens einer Carbonsäure und/oder eines Carbonsäureanhydrids polymerisiert.

2. Verfahren gemäß Anspruch 1, dadurch gekennzeichnet, daß man die zur Behandlung des Tetrahydrofurans verwendeten starken Mineralsäuren, organischen Sulfonsäuren, Silikagel und/oder Bleicherden vor der Polymerisation wieder abtrennt.

3. Verfahren gemäß Anspruch 1 und 2, dadurch gekennzeichnet, daß man die starken Mineralsäuren, organischen Sulfonsäuren, Silikagel und/oder Bleicherden in Mengen von 0,1 bis 3 Gew.-%, bezogen auf Tetrahydrofuran, verwendet.

4. Verfahren gemäß Anspruch 1, dadurch gekennzeichnet, daß die Behandlungszeit 0,5 bis 3 Stunden beträgt.

5. Verfahren gemäß Anspruch 1, dadurch gekennzeichnet, daß die Behandlungstemperatur 10 bis 66°C beträgt.

6. Verfahren gemäß Anspruch 1, dadurch gekennzeichnet, daß man das vorbehandelte Tetrahydrofuran in Gegenwart von Antimonpentachlorid als Polymerisationskatalysator und mindestens einer Carbonsäure und/oder eines Carbonsäureanhydrids oder Bleicherde mit einem Wassergehalt von weniger als 3 Gew.-% als Polymerisationskatalysator und mindestens eines Carbonsäureanhydrids polymerisiert.

7. Verfahren gemäß Anspruch 6, dadurch gekennzeichnet, daß man als Carbonsäureanhydrid Acetanhydrid verwendet.

8. Verfahren gemäß Anspruch 6, dadurch gekennzeichnet, daß die Bleicherde einen Wassergehalt von 0,001 bis 1,5 Gew.-% aufweist.

9. Verfahren gemäß Anspruch 6, dadurch gekennzeichnet, daß die Bleicherde in Mengen von 1 bis 20 Gew.-%, bezogen auf Tetrahydrofuran, verwendet wird.

10. Verfahren gemäß Anspruch 6, dadurch gekennzeichnet, daß man die als Katalysator verwendete Bleicherde nach beendeter Polymerisation von der Reaktionsmischung abtrennt und erneut als Polymerisationskatalysator verwendet.

## Claims

1. A process for the preparation of polybutylene glycol carboxylic acid diesters of the formula

$$R-CO-O-(CH_2CH_2CH_2CH_2-O)_n-CO-R^1$$

where R and $R^1$ are identical or different and each is alkyl, a carboxyl-containing aliphatic radical which may or may not be ethylenically unsaturated, or a carboxyl-containing aromatic radical and n is an integer from 2 to 200, by polymerizing tetrahydrofuran, characterized in that the tetrahydrofuran is treated, before polymerization, with a strong mineral acid, an organic sulfonic acid, silica gel and/or bleaching earth and is then polymerized in the presence of a polymerization catalyst and at least one carboxylic acid and/or carboxylic acid anhydride.

2. A process as claimed in claim 1, characterized in that the strong mineral acid, organic sulfonic acid, silica gel and/or bleaching earth used to treat the tetrahydrofuran is separated off again before carrying out the polymerization.

3. A process as claimed in claims 1 and 2, characterized in that the strong mineral acid, organic sulfonic acid, silica gel and/or bleaching earth is used in an amount of from 0.1 to 3% by weight, based on tetrahydrofuran.

4. A process as claimed in claim 1, characterized in that the treatment time is from 0.5 to 3 hours.

5. A process as claimed in claim 1, characterized in that the treatment temperature is from 10° to 66°C.

6. A process as claimed in claim 1, characterized in that the pretreated tetrahydrofuran is polymerized in the presence of antimony pentachloride as polymerization catalyst and at least one carboxylic acid and/or carboxylic acid anhydride or bleaching earth containing less than 3% by weight of water as polymerization catalyst and at least one carboxylic acid anhydride.

7. A process as claimed in claim 6, characterized in that acetic anhydride is used as the carboxylic

acid anhydride.

8. A process as claimed in claim 6, characterized in that the bleaching earth contains from 0.001 to 1.5% by weight of water.

9. A process as claimed in claim 6, characterized in that the bleaching earth is used in an amount of from 1 to 20% by weight, based on tetrahydrofuran.

10. A process as claimed in claim 6, characterized in that the bleaching earth used as the catalyst is separated from the reaction mixture after completion of the polymerization, and is re-used as a polymerization catalyst.

## Revendications

1. Procédé de préparation de diesters d'acides carboxyliques de polybutylène-glycol de la formule

$$R-CO-O-(CH_2CH_2CH_2CH_2-O)_n-CO-R^1$$

dans laquelle R et $R^1$, qui peuvent être identiques ou différents, désignent chacun un radical alcoyle, un groupe aliphatique comprenant des groupes carboxyle et éventuellement à insaturation éthylénique ou un reste aromatique à groupes carboxyle et n est un nombre entier valant de 2 à 200, par polymérisation du tétrahydrofuranne, caractérisé en ce que, préalablement à sa polymérisation, le tétrahydrofuranne est traité avec des acides minéraux, des acides sulfoniques organiques, du gel de silice et(ou) des terres décolorantes fortement acides, puis il est polymérisé en présence d'un catalyseur de polymérisation et d'au moins un acide carboxylique et(ou) un anhydride d'acide carboxylique.

2. Procédé suivant la revendication 1, caractérisé en ce que les acides minéraux, les acides sulfoniques organiques, le gel de silice et(ou) les terres décolorantes fortement acides, utilisés pour le traitement du tétrahydrofuranne, sont séparés avant la polymérisation.

3. Procédé suivant les revendications 1 et 2, caractérisé en ce que les acides minéraux, les acides sulfoniques organiques, le gel de silice et(ou) les terres décolorantes sont employés en une proportion de 0,1 à 3% en poids par rapport au tétrahydrofuranne.

4. Procédé suivant la revendication 1, caractérisé en ce que la durée du traitement est de 0,5 à 3 heures.

5. Procédé suivant la revendication 1, caractérisé en ce que la température de traitement est de 10 à 66° C.

6. Procédé suivant la revendication 1, caractérisé en ce que le tétrahydrofuranne prétraité est polymérisé en présence de pentachlorure d'antimoine comme catalyseur de polymérisation et d'au moins un acide carboxylique et(ou) un anhydride d'acide carboxylique ou en présence d'une terre décolorante avec une teneur en eau inférieure à 3% en poids comme catalyseur de polymérisation et d'au moins un anhydride d'acide carboxylique.

7. Procédé suivant la revendication 6, caractérisé en ce que l'anhydride d'acide carboxylique est l'anhydride acétique.

8. Procédé suivant la revendication 6, caractérisé en ce que la terre décolorante possède une teneur en eau de 0,001 à 1,5% en poids.

9. Procédé suivant la revendication 6, caractérisé en ce que la terre décolorante est employée en une proportion de 1 à 20% en poids par rapport au tétrahydrofuranne.

10. Procédé suivant la revendication 6, caractérisé en ce que la terre décolorante employée comme catalyseur est séparée du mélange réactionnel après la fin de la polymérisation et réutilisée comme catalyseur de polymérisation.